# FASCICULE DE BREVET EUROPEEN

(11) **EP 1 943 615 B1**
(45) Date de publication et mention de la délivrance du brevet: **28.03.2018**
(21) Numéro de dépôt: 06807668.6
(22) Date de dépôt: 30.10.2006
(51) Int. Cl.: B42D 15/00

(54) **PROCEDE DE SECURISATION RENFORCEE DE DOCUMENTS ET DISPOSITIF DE MISE EN OEUVRE**
VERFAHREN ZUM VERBESSERN EINER DOKUMENTSICHERHEIT UND EINRICHTUNG ZUM AUSFÜHREN DES VERFAHRENS
METHOD FOR ENHANCING A DOCUMENT SECURITY AND A DEVICE FOR CARRYING OUT SAID METHOD

(30) Priorité: 04.11.2005 FR 0511257
(43) Date de publication de la demande: 16.07.2008
(73) Titulaire: IN-IDT, 75016 Paris (FR)
(72) Inventeur: ROBIN, Philippe, F-92340 Bourg La Reine (FR); LY, Pierre, F-92350 Le Plessis Robinson (FR); THEBAULT, Yves, F-91370 Verrieres-le-buisson (FR); GARGALLO, Henri, F-92400 Courbevoie (FR); CORMIER, Michel, F-95800 Cergy (FR)
(74) Mandataire: Esselin, Sophie
(86) Numéro de dépôt international: PCT/EP2006/067944
(87) Numéro de publication internationale: WO 2007/051782

(56) Documents cités:
- EP-A- 1 364 809
- WO-A-90/05640
- WO-A-2004/101290
- FR-A- 2 768 654
- US-A- 5 380 695
- US-A- 5 816 619
- US-A- 6 162 160
- US-A1- 2004 066 441

## Description

La présente invention se rapporte à un procédé de sécurisation renforcée de documents, ainsi qu'à un dispositif de mise en oeuvre de ce procédé et à des documents obtenus par la mise en oeuvre de ce procédé.

Beaucoup de documents d'identité sont réalisés à partir d'impression xérographique sur des feuilles de différents formats. Après avoir découpé ces feuilles, on lamine chaque partie découpée (appelée « coupon ») entre deux feuilles de plastique transparent.

On va brièvement décrire à titre d'exemple le procédé de fabrication d'une carte d'identité dont le support d'impression est du Teslin ™ (un polyéthylène très fortement chargé en silice, s'imprimant facilement par offset, jet d'encre ou laser et toner). Les feuilles de Teslin sont tout d'abord imprimées en offset afin de réaliser le fond de carte qui comporte plusieurs sécurités classiques, telles que des fines lignes guillochées, des irisations (des motifs dont la teinte passe continûment d'une couleur à une autre d'une extrémité de la carte à l'autre). Ces feuilles sont ensuite généralement découpées au format A4. Huit cartes peuvent prendre place sur un tel format. A l'aide d'une imprimante xérographique, on personnalise les différentes cartes des feuilles A4 avec une photographie au recto et les mentions correspondantes d'état civil au recto et au verso. Les feuilles ainsi personnalisées sont ensuite découpées selon un format élémentaire (dit coupon) légèrement plus grand que celui de la carte définitive. Enfin, les coupons sont laminés entre deux laminats de polyester / polyéthylène, puis découpés au format standard de cartes d'identité dit « ID1 ». Des éléments de sécurité supplémentaires peuvent être ajoutés, par exemple des impressions visibles en lumière ultraviolette ou des hologrammes déposés sur la face interne de l'un des laminats. Des laminats en bobines comportant de tels éléments de sécurité sont disponibles dans le commerce.

Ce procédé connu de réalisation de cartes d'identité offre un bon niveau de sécurité, mais il n'est pas à l'abri d'une forme évoluée de falsification consistant à chauffer les cartes, à décoller les laminats de protection de ces cartes, à modifier les données inscrites sur ces cartes et à recoller les laminats sur les cartes falsifiées.

On connait d'après le document US-A-6 162 160 un procédé de sécurisation de documents, mais qui n'offre pas de sécurité contre la falsification par décollement des laminats et modification de ces derniers.

La présente invention a pour objet un procédé de sécurisation renforcée de documents du type précité rendant inopérante toute falsification de ces documents par décollement des laminats selon la revendication 1.

La présente invention a également pour objet une machine de mise en oeuvre de ce procédé selon la revendication 9 ainsi que des documents sécurisés obtenus à l'aide de cette machine.

Le procédé conforme à l'invention est un procédé de sécurisation renforcée de documents comportant chacun un support d'impression sur lequel sont pré-imprimés des fonds de cartes, puis des informations de personnalisation, ce support imprimé étant ensuite laminé entre deux laminats au moins partiellement transparents, ce support comportant une zone de marge qui est éliminée après le laminage, caractérisé en ce que pour chacun de ces documents, on imprime un code barre dans ladite zone de marge, que l'on lit le code barre, que l'on lit dans une base de données de personnalisation les informations correspondant au code barre de ce document, que l'on choisit au moins un élément de personnalisation supplémentaire cohérent avec lesdites informations de personnalisation pour l'imprimer sur au moins l'un des laminats, que l'on préchauffe le(s) laminat(s) et qu'on les lamine à chaud avec le support. De préférence, cet élément de personnalisation supplémentaire est l'un des éléments suivants : une image ordinaire, une image fluorescente sous éclairage ultraviolet (dite « image fantôme »), un texte, un graphique, un motif holographique personnalisé lors de l'impression de personnalisation ou bien un élément crypté.

Selon une autre caractéristique de l'invention, le support d'impression a des dimensions supérieures à celles du document définitif et comporte ainsi au moins une marge libre, et on imprime dans cette marge un code d'identification du document correspondant et que ce code est lu ensuite pour permettre d'imprimer sur le support les informations correspondantes de personnalisation et d'imprimer sur au moins l'un des laminats une image fantôme personnalisée de sécurisation supplémentaire.

La machine de production de documents sécurisés conforme à l'invention est une machine comportant un dépileur pour stocker des coupons ou feuilles de support d'impression imprimé et partiellement personnalisé un poste de personnalisation du support d'impression comportant une imprimante de personnalisation, un calculateur de gestion de la machine relié à l'imprimante de personnalisation, un poste de laminage, des bobines de laminat, un poste de découpe et un empileur récepteur de documents finis, et elle est caractérisée en ce que le calculateur est relié à une base de données contenant toutes les informations nécessaires à la personnalisation des documents et à l'impression par l'imprimante de personnalisation d'un code barre, par le fait que le poste de personnalisation est suivi d'un poste comportant un lecteur de codes barres relié au calculateur, que le calculateur est relié à une imprimante d'impression d'une image fantôme sur l'un des laminats.

Selon une caractéristique de l'invention, ladite imprimante d'impression d'une image fantôme est une imprimante à ruban pigmenté fluorescent sous éclairage ultraviolet.

Selon une autre caractéristique de l'invention, la machine de l'invention comporte des moyens de synchronisation entre les informations imprimées sur l'un des laminats et le coupon correspondant.

Le document sécurisé conforme à l'invention est du type comportant un support d'informations sur chacune des faces duquel est collé, de préférence par collage à chaud, un laminat, et comportant des informations de personnalisation partielle sur le support d'informations, et il est caractérisé en ce que l'un au moins des deux laminats comporte des informations personnalisées.

Selon une caractéristique de l'invention, les informations personnalisées sont au moins une image fantôme fluorescente sous éclairage ultraviolet.

Selon une autre caractéristique de l'invention, l'image fantôme est transférée partiellement sur le support d'informations.

La présente invention sera mieux comprise à la lecture de la description détaillée d'un mode de réalisation, pris à titre d'exemple non limitatif et illustré par le dessin annexé, sur lequel :
- la figure unique est un schéma simplifié d'un exemple de réalisation d'une machine mettant en oeuvre le procédé de l'invention.

L'invention est décrite ci-dessous en référence à la fabrication de cartes d'identité au format standard ID1, mais il est bien entendu qu'elle n'est pas limitée à cette seule application, et qu'elle peut être mise en oeuvre pour la fabrication de tous documents ayant besoin d'être sécurisés, quelles que soient leurs dimensions. De même, l'invention, qui est décrite ci-dessous en référence à un élément de personnalisation se présentant sous forme d'une image fantôme, s'étend également aux cas où cet élément de personnalisation est d'une autre nature, par exemple une image non fantôme, un texte, un graphique, ...

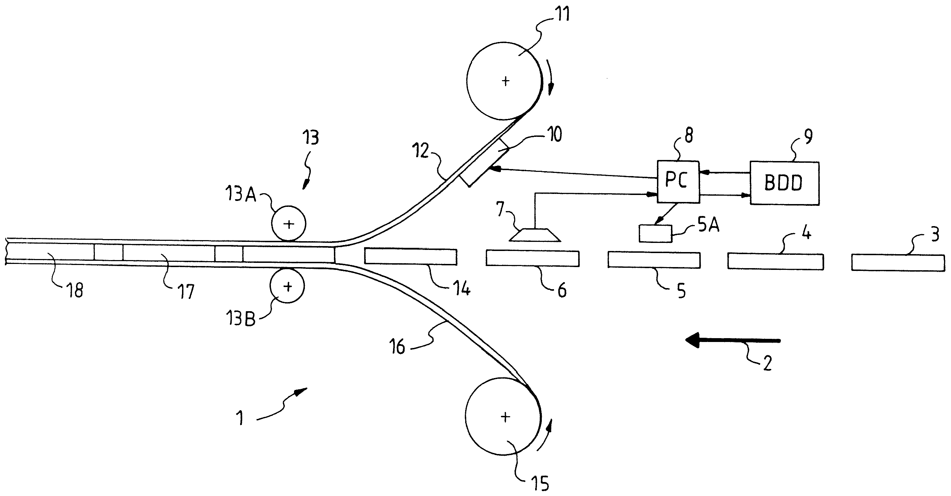

On a schématiquement représenté en figure 1 un exemple de réalisation d'une machine de production de documents sécurisés 1 conforme à l'invention. La plupart des éléments composant cette machine sont ceux des machines similaires de l'art antérieur, à l'exception de ceux relatifs à l'impression d'images fantômes et au traitement de ces images. La machine 1 comporte un ruban convoyeur, non représenté (ou plusieurs, si nécessaire) défilant dans la sens de la flèche 2 (de droite à gauche, sur le dessin) et chargé de transporter automatiquement entre les différents postes décrits ci-après les différents constituants de cartes d'identité au cours de leur élaboration. En variante de l'invention, une partie des opérations de transport entre les différents postes, ou leur totalité, peut être réalisée manuellement.

Le premier poste (dans l'ordre chronologique de la fabrication des documents sécurisés) de la machine 1 est un poste 3 de pré-impression de support d'impression (en Teslin™, par exemple) et de découpe de ce support, en feuilles au format A4 par exemple. Un tel format peut contenir huit cartes, séparées les unes des autres par une zone de marge, qui sera éliminée ultérieurement, après le laminage des cartes. La pré-impression consiste à imprimer sur les feuilles de Teslin des fonds de cartes du type tel que celui décrit ci-dessus en préambule.

Le poste 3 est suivi d'un poste 4 « dépileur » stockant les feuilles pré-personnalisées et découpées. Au poste 5, qui est le poste de personnalisation, on imprime sur chacun des huit emplacements de chaque feuille, par exemple à l'aide d'une imprimante xérographique, les différentes informations habituelles relatives à chacune des huit futures cartes d'identité. Ces informations sont généralement : la photographie du titulaire, les données relatives à son état-civil, sa signature, ... De plus, conformément à l'invention, on imprime sur le côté de chaque emplacement (dans la marge mentionnée ci-dessus) un code barre « 1D » (s'étendant dans une seule direction). Ce code barre servira ultérieurement à identifier chaque futur coupon pour y imprimer les informations de personnalisation et de sécurisation correspondantes. A ce poste 5, les feuilles A4 sont découpées au format élémentaire, dit « coupon », qui est légèrement plus grand que la carte d'identité définitive. Au poste suivant, le poste 6, les coupons sont convoyés individuellement et un lecteur de code barre 7 lit le code 1D imprimé sur chacun d'eux. Les informations correspondant à ce code barre sont envoyées à un calculateur 8 de gestion de la machine, par exemple un PC. Ce calculateur 8 est relié à une base de données 9 contenant toutes les informations nécessaires à la personnalisation des cartes d'identité. Le calculateur 8 est également relié à une imprimante 5A du poste 5 qui imprime sur chaque feuille lesdites informations de personnalisation.

Le procédé de sécurisation de l'invention consiste à choisir certaines de ces informations de personnalisation de la base de données 9 (par exemple la photographie du futur titulaire de la carte d'identité, mais avec une plus faible résolution que celle de la photographie imprimée directement sur le support en Teslin) et à les imprimer en tant qu'image fantôme sur l'un des laminats de la façon exposée ci-après. De façon avantageuse, cette image fantôme a des dimensions légèrement inférieures à celles de la carte d'identité définitive, afin d'en recouvrir la plus grande surface possible. A cet effet, le calculateur 8 est relié à une imprimante thermique 10. Cette imprimante 10 utilise un ruban pigmenté fluorescent sous éclairage ultraviolet. Un premier laminat, appliqué au recto des coupons, provient d'un premier dévidoir 11 disposé au-dessus du convoyeur et dont la bande de laminat 12 est dirigée vers un poste 13 de laminage. Le poste 13 est muni de deux rouleaux chauffants de laminage 13A, 13B. Cette bande 12 passe devant l'imprimante 10 disposée du côté intérieur de la bande 12 (le côté qui sera appliqué contre le recto des coupons). Le poste 13 est situé en aval du poste 6, et il en reçoit les coupons 14 après leur lecture au poste 6. Un deuxième dévidoir 15, situé en-dessous du convoyeur, contient une bande de laminat 16 qui est appliquée contre le verso des coupons au poste 13. Après passage entre les rouleaux 13A et 13B, les coupons laminés 17 sont convoyés à un poste de découpe 18. A ce poste 18, les coupons laminés sont découpés au format standard, dit ID1, pour obtenir les cartes d'identité définitives personnalisées et sécurisées. Ce découpage élimine en particulier lesdites marges contenant le code barre 1D.

Ainsi, selon le procédé de l'invention, le laminage à chaud est avantageusement effectué dans les conditions suivantes :
- fourchette de température de chauffage des rouleaux : 100°C à 130°C
   - Temps de chauffage pendant le laminage : 3 à 5 s

   Cependant le laminat est pré-chauffé pendant environ 3s entre des plaques ayant une température de 185°C.
   Dans de telles conditions, l'image fantôme est transférée partiellement sur le Teslin, ce qui entraîne une modification irréversible de l'image fantôme observée après décollement du laminat, falsification du document et recollement de celui-ci. De plus, si un faussaire changeait la photographie imprimée sur le Teslin, l'image fantôme (la nouvelle photographie correspondant, à plus faible résolution) qu'il imprimerait sur le laminat serait perturbée par la partie d'image fantôme d'origine transférée sur le Teslin lors du laminage d'origine et qui ne peut pratiquement pas être enlevée.

## Revendications

1. Procédé de sécurisation renforcée de documents comportant chacun un support d'impression sur lequel sont pré-imprimés des fonds de cartes (3), puis des informations de personnalisation (5), ce support imprimé étant ensuite laminé entre deux laminats au moins partiellement transparents, ce support comportant une zone de marge qui est éliminée après le laminage, **caractérisé en ce que** pour chacun de ces documents, on imprime un code barre dans ladite zone de marge, que l'on lit le code barre (7), que l'on lit dans une base de données de personnalisation (9) les informations correspondant au code barre de ce document, que l'on choisit (8) au moins un élément de personnalisation supplémentaire cohérent avec lesdites informations de personnalisation pour l'imprimer (10) sur au moins l'un des laminats, que l'on préchauffe le(s) laminat(s) et qu'on les lamine à chaud avec le support (13).

2. Procédé selon la revendication 1, **caractérisé en ce que** l'élément de personnalisation supplémentaire est imprimé en tant qu'image fantôme.

3. Procédé selon la revendication 1 ou 2, **caractérisé en ce que** l'élément de personnalisation est un élément crypté.

4. Procédé selon la revendication 1, 2 ou 3 **caractérisé en ce que** l'élément de personnalisation est une image de sécurisation supplémentaire.

5. Procédé selon la revendication 4, **caractérisé en ce que** l'image est une image fluorescente sous éclairage ultraviolet.

6. Procédé selon l'une des revendications précédentes, **caractérisé en ce que** l'élément de personnalisation est un texte.

7. Procédé selon l'une des revendications précédentes, **caractérisé en ce que** l'élément de personnalisation est un graphique.

8. Procédé selon l'une des revendications précédentes, **caractérisé en ce que** l'élément de personnalisation est un motif holographique personnalisé lors de l'impression de personnalisation.

9. Machine de production de documents sécurisés mettant en oeuvre le procédé selon l'une quelconque des revendications précédentes, ladite machine comportant le long d'un dispositif de convoyage :
- un poste (3) de pré-impression et de découpe dudit support d'impression en coupons ou en feuilles, ledit support comportant une zone de marge ;
- un dépileur (4) pour stocker lesdits coupons ou feuilles de support d'impression pré-imprimé et partiellement personnalisé,
- un poste de personnalisation (5) du support d'impression comportant une imprimante de personnalisation (5A), un code barre étant imprimé dans ladite zone de marge ;
- un calculateur de gestion de la machine (8) relié à l'imprimante de personnalisation ;
- une base de données (9) reliée audit calculateur (8), contenant toutes les informations nécessaires à la personnalisation des documents ;
- un poste (6) comportant un lecteur de codes barres (7) relié audit calculateur (8), lisant le code barre imprimé sur ledit support, les informations correspondant à ce code barres étant envoyées audit calculateur (8) ;
- un premier dévidoir (11) de de laminat (12) et un deuxième dévidoir (15) de laminat (16) ;
- une imprimante thermique (10) reliée audit calculateur (8) qui imprime certaine desdites informations de personnalisation sur l'un desdits laminats ;
- un poste de laminage (13),
- un poste de découpe (18) et un empileur récepteur de documents finis,

10. Machine selon la revendication 9, **caractérisée en ce que** ladite imprimante d'impression d'une image fantôme est une imprimante à ruban pigmenté fluorescent sous éclairage ultraviolet.

11. Machine selon la revendication 9 ou 10, **caractérisée en ce qu'**elle comporte des moyens de synchronisation entre les informations imprimées sur l'un des laminats et le coupon correspondant.

## Patentansprüche

1. Verfahren zum Erhöhen der Sicherheit von Dokumenten, die jeweils ein Druckmedium umfassen, auf dem Kartenvorlagen (3), dann Personalisierungsinformationen (5) vorgedruckt sind, wobei dieses bedruckte Medium dann zwischen zwei wenigstens teilweise transparenten Laminaten laminiert wird, wobei dieses Medium eine Randzone aufweist, die nach dem Laminieren entfernt wird, **dadurch gekennzeichnet, dass** für jedes dieser Dokumente ein Barcode in die Randzone gedruckt wird, der Barcode (7) gelesen wird, die dem Barcode dieses Dokuments entsprechenden Informationen in einer personalisierten Datenbank (9) gelesen werden, wenigstens ein zusätzliches Personalisierungselement ausgewählt (8) wird, das mit den Personalisierungsinformationen übereinstimmt, um es auf wenigstens eines der Laminate zu drucken (10), die ein oder mehreren Laminate vorerhitzt und mit dem Medium (13) warmgewalzt werden.

2. Verfahren nach Anspruch 1, **dadurch gekennzeichnet, dass** das zusätzliche Personalisierungselement als Geisterbild gedruckt wird.

3. Verfahren nach Anspruch 1 oder 2, **dadurch gekennzeichnet, dass** das Personalisierungselement ein verschlüsseltes Element ist.

4. Verfahren nach Anspruch 1, 2 oder 3, **dadurch gekennzeichnet, dass** das Personalisierungselement ein Bild mit erhöhter Sicherheit ist.

5. Verfahren nach Anspruch 4, **dadurch gekennzeichnet, dass** das Bild ein unter ultraviolettem Licht fluoreszierendes Bild ist.

6. Verfahren nach einem der vorherigen Ansprüche, **dadurch gekennzeichnet, dass** das Personalisierungselement ein Text ist.

7. Verfahren nach einem der vorherigen Ansprüche, **dadurch gekennzeichnet, dass** das Personalisierungselement eine Graphik ist.

8. Verfahren nach einem der vorherigen Ansprüche, **dadurch gekennzeichnet, dass** das Personalisierungselement ein holografisches Muster ist, das während des Personalisierungsdruckens personalisiert wird.

9. Maschine zum Produzieren von sicheren Dokumenten unter Anwendung des Verfahrens nach einem der vorherigen Ansprüche, wobei die Maschine entlang einer Fördervorrichtung Folgendes umfasst:
- eine Station (3) zum Vordrucken und Schneiden des Druckmediums in Kupons oder Blätter, wobei das Medium eine Randzone umfasst;
- einen Entstapeler (4) zum Lagern der Kupons oder Blätter von vorgedrucktem und teilweise personalisiertem Druckmedium;
- eine Station (5) zum Personalisieren des Druckmediums, umfassend einen Personalisierungsdrucker (5A), wobei ein Barcode in die Randzone gedruckt wird;
- einen Maschinenmanagementrechner (8), der mit dem Personalisierungsdrucker verbunden ist;
- eine mit dem Rechner (8) verbundene Datenbank (9), die alle zum Personalisieren der Dokumente benötigten Informationen enthält;
- eine Station (6), die einen mit dem Rechner (8) verbundenen Barcode-Leser (7) umfasst, der den auf das Medium gedruckten Barcode liest, wobei die diesem Barcode entsprechenden Informationen zu dem Rechner (8) gesendet werden;
- eine erste Haspel (11) für Laminat (12) und eine zweite Haspel (15) für Laminat (16);
- einen mit dem Rechner (8) verbundenen Thermodrucker (10), der einige der Personalisierungsinformationen auf eines der Laminate druckt;
- eine Laminierungsstation (13);
- eine Schneidstation (18) und einen Stapel zum Empfangen von fertigen Dokumenten.

10. Maschine nach Anspruch 9, **dadurch gekennzeichnet, dass** der Drucker zum Drucken eines Geisterbildes ein Drucker mit pigmentiertem Band ist, das unter violettem Licht fluoreszierend ist.

11. Maschine nach Anspruch 9 oder 10, **dadurch gekennzeichnet, dass** sie Mittel zum Synchronisieren zwischen den auf eines der Laminate gedruckten Informationen und dem entsprechenden Kupon umfasst.

## Claims

1. A method for enhancing the security of documents that each comprise a printing medium, on which card backgrounds (3), then personalisation information (5) are pre-printed, this printed medium then being laminated between two laminates that are at least partially transparent, this medium comprising a margin area that is removed after the lamination operation, **characterised in that**, for each document, a barcode is printed in said margin area, the barcode is read (7), the information corresponding to the barcode of this document is read in a personalisation database (9), at least one additional personalisation element is selected (8) that is consistent with said personalisation information for printing (10) on at least one of the laminates, the one or more laminates are preheated and hot-rolled with the medium (13).

2. The method as claimed in claim 1, **characterised in that** the additional personalisation element is printed as a ghost image.

3. The method as claimed in claim 1 or 2, **characterised in that** the personalisation element is an encrypted element.

4. The method as claimed in claim 1, 2 or 3, **characterised in that** the personalisation element is an image with enhanced security.

5. The method as claimed in claim 4, **characterised in that** the image is an image that is fluorescent under ultraviolet light.

6. The method as claimed in any one of the preceding claims, **characterised in that** the personalisation element is a text.

7. The method as claimed in any one of the preceding claims, **characterised in that** the personalisation element is a graph.

8. The method as claimed in any one of the preceding claims, **characterised in that** the personalisation element is a holographic pattern personalised during the personalisation printing operation.

9. A machine for producing secure documents implementing the method as claimed in any one of the preceding claims, said machine comprising, along a conveyor device:
- a station (3) for pre-printing and cutting said printing medium into coupons or sheets, said medium comprising a margin area;
- a destacker (4) for storing said coupons or sheets of the pre-printed and partially personalised printing medium;
- a station (5) for personalising the printing medium comprising a personalisation printer (5A), a barcode being printed in said margin area;
- a machine management computer (8) connected to the personalisation printer;
- a database (9) connected to said computer (8), containing all the information required for the personalisation of the documents;
- a station (6) comprising a barcode reader (7) connected to said computer (8), reading the barcode printed on said medium, the information corresponding to this barcode being sent to said computer (8);
- a first reel (11) of laminate (12) and a second reel (15) of laminate (16);
- a thermal printer (10) connected to said computer (8), which printer prints some of said personalisation information on one of said laminates;
- a laminating station (13);
- a cutting station (18) and a stacker for receiving finished documents.

10. The machine as claimed in claim 9, **characterised in that** said printer for printing a ghost image is a printer with a pigmented ribbon that is fluorescent under ultraviolet light.

11. The machine as claimed in claim 9 or 10, **characterised in that** it comprises means for synchronising between the information printed on one of the laminates and the corresponding coupon.
